(19) Europäisches Patentamt

European Patent Office

Office européen des brevets

(11) **EP 1 698 930 A2**

(12) **EUROPEAN PATENT APPLICATION**

(43) Date of publication:
06.09.2006 Bulletin 2006/36

(51) Int Cl.:
*G02B 26/10* (2006.01)

(21) Application number: 06003780.1

(22) Date of filing: 24.02.2006

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: 04.03.2005 JP 2005061308
11.07.2005 JP 2005201868

(71) Applicant: **Nidec Sankyo Corporation
Suwa-gun, Nagano 393-8511 (JP)**

(72) Inventor: **Ozawa, Shigeru
c/o Nidec Sankyo Corporation
Komagane-shi,
Nagano (JP)**

(74) Representative: **Olesen, Kaj et al
Patentgruppen,
Arosgaarden,
Aaboulevarden 31
8000 Aarhus C (DK)**

(54) **Light beam scanning device**

(57) A light beam scanning device (1) includes a light source device (10) and an optical deflection mechanism (3). The optical deflection mechanism includes an optical deflection disk (30) and a motor (40) for driving the disk. The disk face of the optical deflection disk includes an inclined face (33a,33b,...) which is formed in each of a plurality of optical deflection regions (32a,32b,...) divided in a peripheral direction for refracting and emitting a light beam in a direction different from that of refracting and emitting from an adjacent optical deflection region, the inclined face being formed so as to be inclined in a radial direction in each of the plurality of the optical deflection regions. The light beam scanning device may also include a sub-scanning mechanism (300) for changing the position or the attitude of a specified optical element (600) to vary a main scanning position of the light beam in a sub-scanning direction.

【Fig. 1】

[Fig. 2]

**Description**

CROSS REFERENCE TO RELATED APPLICATIONS

The present invention claims priority under 35 U.S.C. §119 to Japanese Application No. 2005-61308 filed March 4, 2005 and Japanese Application No. 2005-201868 filed July 11, 2005, both of which are incorporated herein by reference.

FIELD OF THE INVENTION

An embodiment of the present invention may relate to a light beam scanning device for causing a light beam which is emitted from a light emitting source to scan in a predetermined direction.

BACKGROUND OF THE INVENTION

A light beam scanning device has been widely utilized in an image forming device such as a laser printer, a digital copying machine and a facsimile, and in a bar-code reader, an inter-vehicle distance measuring device, a monitoring device and the like. In a light beam scanning device which is used in an inter-vehicle distance measuring device, a monitoring device and the like, a light beam emitted from a light source is deflected by a polygon mirror and is emitted as a scanning light beam. The return light beam which is the scanning light beam reflected by a preceding vehicle is received by a photo-detector to detect the existence of the preceding vehicle and the distance to the preceding vehicle (see, for example, Japanese Patent Laid-Open No. Hei 11-326499).
In the inter-vehicle distance measuring device or the monitoring device as described above, in order to accurately detect whether there is a preceding vehicle or an obstacle in a predetermined direction or not, a lot of light beams are required to be emitted within a short time in the same direction. Such an operation may be attained by a polygon mirror that is rotated by a DC brushless motor at a high speed.
However, when a DC brushless motor is used, the motor itself is expensive and, since the polygon mirror is continuously rotated, it cannot be avoided that the scanning direction of the light beam varies every moment even when a pulsed laser with an extremely short time is used, and thus detection with a high degree of accuracy is difficult.
Further, the driving operation as described above is possible by means of that the rotation of the polygon mirror is stopped at a predetermined timing and a light beam is emitted during the stopped period. However, when the motor is stopped, a considerable time is required for activation of the motor due to its inertia force. Further, at the time of stopping the motor, a considerable time is required due to the inertia force. Therefore, the method of stopping the polygon mirror requires a longer observation period and thus it is not preferable.
Further, in such an inter-vehicle distance measuring device or a monitoring device, for example, in order to surely detect the return light beam even when the heights of vehicles running ahead are different, the emitting direction of a light beam in a direction (sub-scanning direction) perpendicular to the scanning direction (main scanning direction) by a polygon mirror may be varied by means of that the rotation of a stepping motor or the like is decelerated by a normally used gear mechanism to change the position or the attitude of a prescribed optical element.
However, in the case of the structure as described above, when the position or the attitude of an optical element is held only by the holding torque of a stepping motor, the position or the attitude of the optical element may be varied by vibration or the like, and thus the stepping motor is required to be continuously applied with an electric current and a problem caused by heat generation may easily occur.

BRIEF DESCRIPTION OF THE INVENTION

In view of the problems described above, an embodiment of the present invention may advantageously provide a light beam scanning device which is capable of irradiating a light beam in a specified direction during a certain time period without stopping a motor.
Further, another embodiment of the present invention may advantageously provide a light beam scanning device which is capable of holding a main scanning position in a specified direction with respect to a sub-scanning direction even when energization to a motor is stopped.
Thus, according to an embodiment of the present invention, there may be provided a light beam scanning device including a light source device, and an optical deflection mechanism for causing a light beam emitted from the light source device to scan over a specified angle area, and the optical deflection mechanism includes an optical deflection disk and a synchronous motor for driving the optical deflection disk. The disk face of the optical deflection disk includes an inclined face which is formed in each of a plurality of optical deflection regions divided in a peripheral direction for refracting and emitting the light beam which is incident on the optical deflection disk in a direction different from the direction of refracting and emitting from an adjacent optical deflection region, and the inclined face is formed so as to be inclined in a radial direction in each of the plurality of the optical deflection regions.

In accordance with an embodiment, an optical deflection disk provided with a plurality of optical deflection regions in a peripheral direction is used as an optical deflection element and an inclined face formed in the optical deflection region in the optical deflection disk is inclined in a radial direction. Therefore, even when the optical deflection disk is rotated at an equal speed, a light beam emitted through the optical deflection disk is emitted in the same direction during a time period when the light beam emitted from the light source device is located in the same optical deflection region. Accordingly, the light beam is emitted in the same direction during a specified time period even though the rotation of the optical deflection disk is not stopped. In addition, when the light beam emitted from the light source device moves to an adjacent optical deflection region, the direction of the light beam emitted from the optical deflection disk is immediately changed and the transitional period hardly occurs and thus useless time is hardly required. Further, different from the system in which an optical deflection disk is rotated at a high speed to emit a number of light beams in the same direction during a short time, according to this embodiment, the light-emitting direction of the light beam is not changed during a prescribed time period and thus the detection of an object can be surely performed. In addition, the optical deflection disk is not required to be rotated at a high speed, an inexpensive synchronous motor such as a stepping motor can be used.

In accordance with an embodiment, the synchronous motor is, for example, a stepping motor.

In accordance with an embodiment, a sensor for detecting the rotational position of the optical deflection disk is provided. According to this structure, the home position of the optical deflection disk, i.e., the home position of light beam scanning can be accurately detected on the basis of the detection result of the sensor.

In accordance with an embodiment, the inclination angle of the inclined face is successively varied in the plurality of the optical deflection regions which are disposed in the peripheral direction. According to this structure, the scanning direction of the light beam is changed successively.

In accordance with an embodiment, a reflection type optical deflection disk may be used as the optical deflection disk, which reflects a light beam that is incident on the optical deflection disk in a direction different from the direction of an adjacent optical deflection region in each of the plurality of the optical deflection regions. However, it is preferable that a transmission type optical deflection disk is used which is provided with an inclined face that refracts and emits a light beam that is transmitted through the optical deflection disk in a direction different from the direction of an adjacent optical deflection region in each of the plurality of the optical deflection regions. According to the transmission type optical deflection disk as described above, a light source device can be disposed on an opposite side to the emitting side of the light beam with respect to the optical deflection disk and thus a high degree of freedom of layout is attained.

In accordance with an embodiment, the light source device emits a light beam as a converged light beam which is long in the radial direction of the optical deflection disk and which is focused at the optical deflection disk or its vicinity in the peripheral direction. According to this structure, the light beam emitted from the light source device does not extend over adjacent optical deflection regions and thus the emitting direction through the optical deflection disk can be controlled with a high degree of accuracy.

In accordance with an embodiment, the light source device includes a laser beam emitting element and a lens which guides a light beam emitted from the laser beam emitting element as a converged light beam that is focused at the optical deflection disk or its vicinity in at least one of a first direction and a second direction which are perpendicular to each other in an optical axis direction. According to this structure, the width of the optical deflection region can be narrowed in at least one of the first direction and the second direction and thus the size of the optical deflection disk can be reduced. Therefore, productivity of the optical deflection disk can be enhanced and an optical deflection disk, in which, for example, the number of scanning points is increased by utilizing the latest micronization technique can be provided. Further, when the size of the optical deflection disk is reduced, the optical deflection disk is driven in an improved balance state and thus optical scanning can be performed with a high degree of accuracy and the downsizing of the synchronous motor for driving the optical deflection disk can be also attained.

In accordance with an embodiment, a position adjusting mechanism is provided for adjusting a relative position in an optical axis direction between the laser beam emitting element and the lens.

Further, according to another embodiment of the present invention, there may be provided a light beam scanning device including a light source device; a main scanning mechanism for causing a light beam emitted from the light source device to scan over a specified angle area in a main scanning direction, and a sub-scanning mechanism for changing the position or the attitude of a specified optical element to vary the main scanning position of the light beam in a sub-scanning direction which is perpendicular to the main scanning direction. The sub-scanning mechanism includes a sub-scanning drive motor, and a gear mechanism for decelerating the rotation of the sub-scanning drive motor to transmit to the specified optical element. The gear mechanism includes a driving gear comprising of a chipped tooth gear and a driven gear which is driven by the driving gear, and the driving gear is provided in a specified position in the peripheral direction with a tooth part for rotationally driving the driven gear and a rotation preventing part which externally or internally abuts with the driven gear for preventing the rotation of the driven gear.

In accordance with an embodiment, in the sub-scanning mechanism, when the rotation of the sub-scanning drive motor is decelerated by the gear mechanism and transmitted to the specified optical element, the position or the attitude of the specified optical element is changed and the main scanning position of the light beam is varied in the sub-scanning direction which is perpendicular to the main scanning direction. Therefore, for example, in the case that the light beam scanning device is used in an inter-vehicle distance measuring device or the like, even when the heights of vehicles running ahead are different from each other, the return light beams can be surely detected. Further, the driving gear in the gear mechanism includes a tooth part for driving the driven gear and the rotation preventing part, which externally or internally abuts with the driven gear for preventing the turning of the driven gear. Therefore, after the main scanning position of the light beam is varied in the sub-scanning direction, the turning of the driven gear is prevented by the rotation preventing part of the driving gear. Accordingly, the position or the attitude of the specified optical element is held even in the state that energization of the sub-scanning drive motor is stopped and the position or the attitude of the specified optical element is not varied by vibration or the like.

In accordance with an embodiment, the entire circumference of the driving gear except the portion where the tooth part is formed is formed as the rotation preventing part. In this case, it is preferable that the sub-scanning mechanism is structured such that the driving gear is rotated from a waiting position where the rotation of the driven gear is prevented by the rotation preventing part to the waiting position again while the driven gear is rotationally driven by the driving gear.

In accordance with an embodiment, the sub-scanning mechanism is provided with a backlash eliminating means for eliminating a backlash between the driving gear and the driven gear. A compression coil spring or the like, which urges the specified optical element to eliminate the backlash between the chipped tooth gear and the driven gear, may be used as the backlash eliminating means.

In accordance with an embodiment, the main scanning mechanism includes an optical deflection disk in which an emitting direction of the light beam in the main scanning direction varies on the basis of an incident position of the light beam in the peripheral direction, and a main scanning motor for rotationally driving the optical deflection disk to vary the incident position of the light beam to the optical deflection disk of the light beam from the light source device. According to the optical deflection disk as described above, effects of surface wobbling due to rotation for jitter characteristic are reduced. Further, since the structure of the optical deflection disk is simple, a high degree of productivity and stability of quality can be obtained.

In accordance with an embodiment, the specified optical element is a divergence angle adjusting lens provided with a power for adjusting a divergence angle in the sub-scanning direction of the light beam emitted from the main scanning mechanism. According to the structure as described above, the light beam with an arbitrary divergence angle in the sub-scanning direction can be emitted.

Further, according to another embodiment of the present invention, there may be provided a light beam scanning device including a light source device and a main scanning mechanism for causing a light beam emitted from the light source device to scan over a specified angle area in a main scanning direction. The main scanning mechanism includes an optical deflection disk in which an emitting direction of the light beam in the main scanning direction varies on the basis of an incident position of the light beam in the peripheral direction, and a main scanning motor for rotationally driving the optical deflection disk to vary the incident position of the light beam to the optical deflection disk of the light beam from the light source device. Further, the light beam scanning device includes a sub-scanning mechanism for changing a position or an attitude of a specified optical element to vary a main scanning position of the light beam in a sub-scanning direction which is_perpendicular to the main scanning direction. The sub-scanning mechanism includes a sub-scanning drive motor and a gear mechanism for decelerating and transmitting the rotation of the sub-scanning drive motor to the specified optical element.

In accordance with an embodiment, an optical deflection disk provided with a plurality of optical deflection regions in a peripheral direction is used as an optical deflection element. Therefore, even when the optical deflection disk is rotated at an equal speed, a light beam emitted through the optical deflection disk is emitted in the same direction during a time period when the light beam emitted from the light source device is located in the same optical deflection region. Accordingly, the light beam is emitted in the same direction during a specified time period even though the rotation of the optical deflection disk is not stopped. In addition, when the light beam emitted from the light source device is moved to an adjacent optical deflection region, the direction of the light beam emitted through the optical deflection disk is immediately changed and the transitional period is hardly required and thus useless time hardly occurs. Further, different from the system in which an optical deflection disk is rotated at a high speed to emit a number of light beams in the same direction during a short time, according to this embodiment, the light-emitting direction of the light beam is not changed during a prescribed time period and thus the detection of an object can be surely performed.

Further, in accordance with an embodiment, in the sub-scanning mechanism, when the rotation of sub-scanning drive motor is decelerated by the gear mechanism and transmitted to the specified optical element, the position or the attitude of the specified optical element is changed and the main scanning position of the light beam is varied in the sub-scanning direction which is perpendicular to the main scanning direction. Therefore, for example, in the case that the light beam scanning device is used in an inter-vehicle distance measuring device or the like, even when the heights of vehicles running ahead are different from each other, the return light beams can be surely detected.

In accordance with an embodiment, the specified optical element is a divergence angle adjusting lens provided with a power for adjusting a divergence angle in the sub-scanning direction of the light beam emitted from the main scanning mechanism. Further, an inclined face may be formed in each of a plurality of optical deflection regions divided in a peripheral direction for refracting and emitting the light beam, which is incident on the optical deflection disk, in a direction different from the direction of refracting and emitting from an adjacent optical deflection region.

Further, in accordance with an embodiment, the light source device includes a laser beam emitting element and a lens which guides a light beam emitted from the laser beam emitting element as a converged light beam that is focused at the optical deflection disk or its vicinity in at least one of a first direction and a second direction that are perpendicular to each other in an optical axis direction.

Other features and advantages of the invention will be apparent from the following detailed description, taken in conjunction with the accompanying drawings that illustrate, by way of example, various features of embodiments of the invention.

BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:

Fig. 1 is a schematic side view showing a schematic structure of a light beam scanning device in accordance with an embodiment of the present invention.

Fig. 2 is an explanatory view showing the principle of a light beam scanning device in accordance with an embodiment.

Fig. 3(a) is a plan view showing a transmission type optical deflection disk that is used in a light beam scanning device in accordance with an embodiment. Fig. 3(b) is a sectional view showing the transmission type optical deflection disk cut by the line "X-X" in Fig. 3(a), Fig. 3(c) is a sectional view cut by the line "Y-Y" in Fig. 3(a), and Fig. 3(d) is a sectional view cut by the line "Z-Z".

Fig. 4 is an explanatory view of a light source device which is used in a light beam scanning device in accordance with an embodiment.

Fig. 5 is an explanatory view showing temporal variations of a scanning direction in a light beam scanning in accordance with an embodiment.

Fig. 6(a) is a plan view showing a light beam scanning device in accordance with an embodiment and Fig. 6 (b) is its side view.

Fig. 7(a) is a perspective view showing a light beam scanning device in accordance with an embodiment and Fig. 7(b) is its sectional view.

Fig. 8 is an exploded perspective view showing a light beam scanning device in accordance with an embodiment.

Fig. 9 is a perspective view showing a light beam scanning device in accordance with another embodiment which is viewed from obliquely rear side.

Fig. 10 is a perspective view showing a light beam scanning device in accordance with another embodiment which is viewed from obliquely front side.

Fig. 11 is a plan view showing a light beam scanning device in accordance with another embodiment.

Fig. 12 is a side view showing a light beam scanning device in accordance with another embodiment.

Fig. 13 is a schematic side view showing a schematic structure of a portion of a main scanning mechanism in a light beam scanning device in accordance with an embodiment.

Fig. 14 is an explanatory view showing the principle of the main scanning operation of a main scanning mechanism in a light beam scanning device in accordance with another embodiment.

Fig. 15 is a side view showing the structure of a sub-scanning mechanism and the like in a light beam device in accordance with another embodiment in which a part of a frame and the like is cut off.

Figs. 16(a), 16(b) and 16(c) are explanatory views showing the operation of a sub-scanning mechanism in a light beam device in accordance with another embodiment.

DETAILED DESCRIPTION OF THE PREFERRED EMBODIMENTS

A light beam device in accordance with an embodiment will be described below with reference to the accompanying drawings.

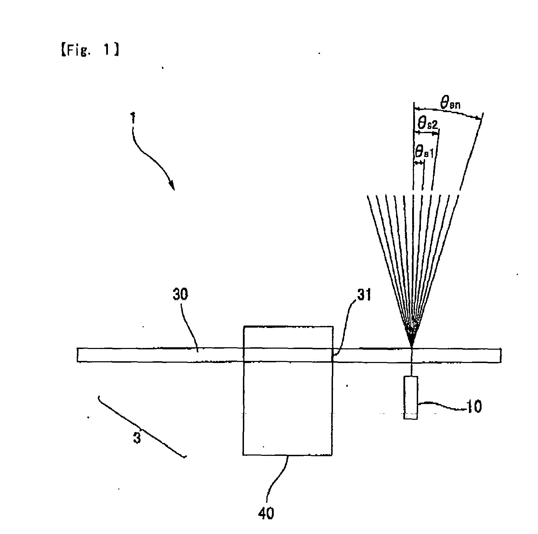

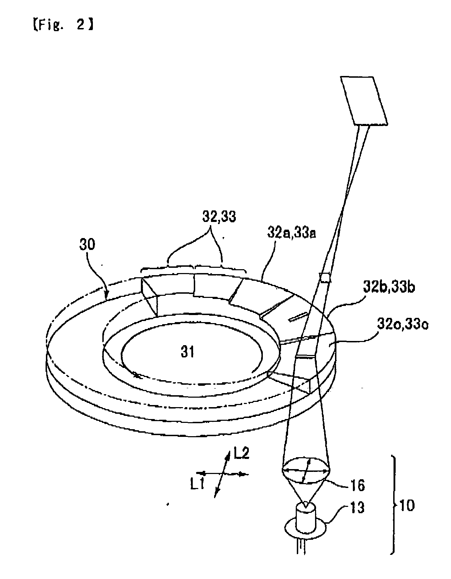

Fig. 1 is a schematic side view showing a schematic structure of a light beam scanning device to which the present invention is applied and Fig. 2 is an explanatory view showing its principle. In the drawings used in the description below, the number of optical deflection regions and the like is reduced for convenience of explanation and illustration.

A light beam scanning device 1 shown in Figs. 1 and 2 includes a light source device 10, which is provided with a laser diode 13 (laser beam emitting element) and a collimating lens or a condenser lens 16, and an optical deflection mechanism 3 for causing a light beam emitted from the light source device 10 to scan over a predetermined angular range by an optical deflection element. The optical deflection mechanism 3 includes a transmission type optical deflection disk 30 as an optical deflection element and a synchronous motor 40 for rotating the transmission type optical deflection disk 30 around its axial line. A center hole 31 is formed at the center of the transmission type optical deflection disk 30 and is held by the rotation output part of a synchronous motor 40. Therefore, the transmission type optical deflection disk 30 can be rotationally driven around the shaft (the center of the transmission type optical deflection disk 30) of the synchronous motor 40.

The light beam scanning device 1 is constructed such that, under the condition that the transmission type optical deflection disk 30 is rotated, a light beam emitted in a direction perpendicular to the disk face of the transmission type optical deflection disk 30 from the light source device 10 is incident on the transmission type optical deflection disk 30 to be refracted by the transmission type optical deflection disk 30, and the light beam is scanned in a predetermined direction. In accordance with an embodiment, a stepping motor is used for the synchronous motor 40. Not only an external synchronization type of motor such as a stepping motor but also an internal synchronization type of motor such as a brushless motor or a DC commutator motor may be used as the synchronous motor 40. Further, a synchronous motor with the use of an AC power, an AC inductance/capacitor motor and the like may be used as the synchronous motor 40.

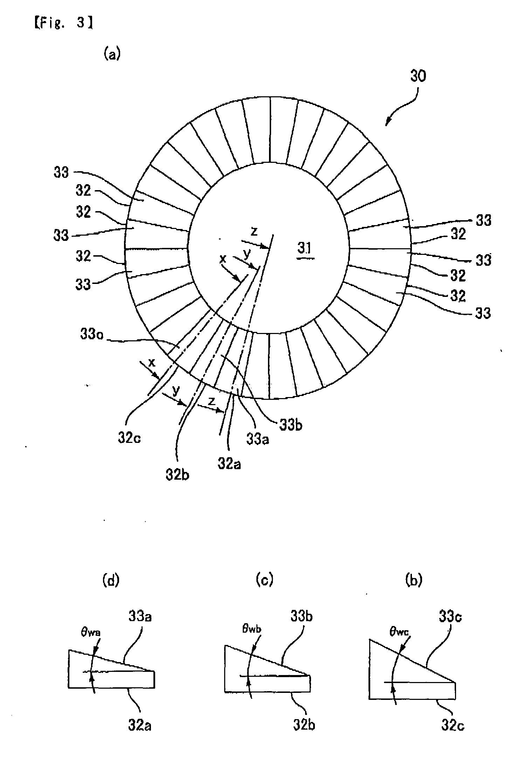

Fig. 3(a) is a plan view showing the transmission type optical deflection disk used in the light beam scanning device which is shown in Figs. 1 and 2, Fig. 3(b) is its sectional view showing the transmission type optical deflection disk cut by the line "X-X", Fig. 3(c) is its sectional view cut by the line "Y-Y", and Fig. 3(d) is its sectional view cut by the line "Z-Z".

As shown in Fig. 1, Fig. 2 and Figs. 3(a), 3(b), 3(c) and 3(d), the transmission type optical deflection disk 30 is formed in a flat disk shape with a center hole 31 at a center portion. In accordance with an embodiment, the disk 30 is formed of transparent resin. The transmission type optical deflection disk 30 is provided with a plurality of optical deflection regions 32a, 32b, ... (hereinafter, optical deflection regions 32) which is formed in a radial shape and divided in a circumferential direction with the center hole 31 as the center. In accordance with an embodiment, the optical deflection region 32 is a region that is divided with the center hole 31 as the center in a circumferential direction at approximately equal angular intervals.

The number of the optical deflection regions 32 is determined by the number of scanning points of light beam scanning. For example, when the number of the optical deflection regions 32 is set to be "201" and the scanning range of the light beam is set to be $\pm 10°$, the resolution power in the scanning of the light beam is 0.1°. Further, for example, when the diameter of the transmission type optical deflection disk 30 at the position where the light beam transmits is set to be 40 mm, the one width in the circumferential direction of the optical deflection region 32 at the transmitting position of the light beam is 0.63 mm.

Inclined faces 33a, 33b, ... (hereinafter, inclined faces 33) for refracting the incident light beam are formed in the optical deflection regions 32 so as to be inclined in a radial direction. In accordance with an embodiment, the inclined face 33 is formed on only the face (upper face) on the light-emitting side of the transmission type optical deflection disk 30 over the entire circumference and the face on its incident side is formed in a flat face shape which is perpendicular to the shaft of the synchronous motor 40.

The inclined face 33 is formed in each of the optical deflection regions 32 with a specified angle. For example, as shown in Figs. 3(b), 3(c) and 3(d), the cross section in the radial direction of the respective optical deflection regions 32 is formed in a wedge shape. More specifically, the cross section in the radial direction of the respective optical deflection regions 32 is formed in a trapezoidal shape whose inner peripheral side and outer peripheral side are parallel to each other.

In accordance with an embodiment, when the inclination angle of the inclined face 33 is set to be θw, the scanning angle of the light beam emitted through the transmission type optical deflection disk 30 is set to be θs (see Fig. 1) and, when the refractive index of the transmission type optical deflection disk 30 is set to be "n", the inclined face 33 is formed so as to satisfy the relationship of the following expression;

$$\sin(\theta w + \theta s) = n \cdot \sin \theta w$$

wherein "n" is the refraction angle of the material of the transmission type optical deflection disk 30. For example, when "n" = 1.51862, in the case that the scanning angle θs is set to be 10°, the inclination angle θw may be set to be 18.02°.

In addition, in accordance with an embodiment, the inclination angles θw of the inclined faces 33 of adjacent optical deflection regions 32 gradually increase or decrease. For example, as shown in Figs. 3(b), 3(c) and 3(d), the inclination angles θwa, θwb, θwc of the respective inclined faces 33a, 33b, 33c of the adjacent optical deflection regions 32a, 32b, 32c increase gradually. Further, the inclined faces 33 of the optical deflection regions 32 include a face which is downwardly inclined from its inner peripheral side toward its outer peripheral side, a face which is downwardly inclined from its outer peripheral side toward its inner peripheral side, and a face which is parallel to the disk face. In other words, the inclined faces 33 include a face with θw of "+" (plus), a face with θw of "-" (minus), and a face with θw of 0° (zero degree).

The transmission type optical deflection disk 30 may be directly produced from transparent resin by an ultra-precision working such as cutting or may be produced with a molding die in consideration of production cost. In accordance with an embodiment, the inclined face 33 is formed only on the face on the light-emitting side of the transmission type optical deflection disk 30 and the face on the incident side is formed in a flat shape. Therefore, in order to produce the transmission type optical deflection disk 30 by using a molding die, only one face o.f the piece working for the molding die is required and thus the manufacturing of the molding die becomes easy. Further, when the transmission type optical deflection disk 30 is produced by directly cutting transparent resin, the face on the incident side is formed in a flat face and thus blank material is easily fixed and working is easy. In this case, when antireflection processing is performed on the transmission type optical deflection disk 30 by applying a thin film or forming a fine structure thereto, the return light beam that causes the variation of the output of the light source device 10 can be reduced. Further, since the transmission factor is improved, the loss of light quantity from the light source device 10 can be reduced.

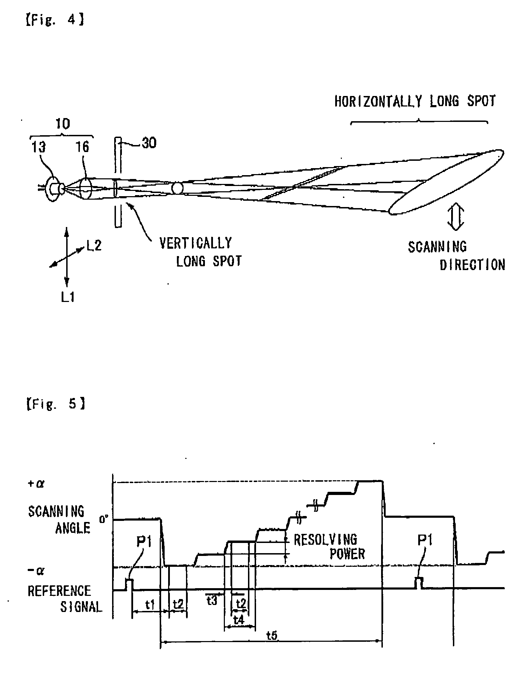

Fig. 4 is an explanatory view of a light source device which is used in a light beam scanning device in accordance with an embodiment. As shown in Figs. 2 and 4, the light source device 10 includes a laser diode 13 as a light source and the collimating lens or the condenser lens 16. The light source device 10 emits a light beam with a far field pattern having a major axis direction and a minor axis direction to the transmission type optical deflection disk 30. The laser diode 13 emits a light beam whose divergence angles in a first direction L1 (vertical direction in Fig. 4) and a second direction L2 (horizontal direction/deflection direction in Fig. 4) that are perpendicular to each other are different from each other. In Fig. 4, the divergence angle in the first direction L1 is larger than that in the second direction L2. In accordance with an embodiment, the light beam is emitted through the collimating lens or the condenser lens 16 such that the focal point in the first direction L1 is set to be longer than the focal point in the second direction L2. Therefore, the light beam emitted from the light source device 10 is formed in a vertically long spot on a near side in an optical axis direction and formed in a horizontally long spot on a far side in the emitting direction.

In accordance with an embodiment, the arranging relationship of the collimating lens or the condenser lens 16 and the transmission type optical deflection disk 30 is set such that the light beam becomes a convergent light beam which focuses on the disk face or its vicinity of the transmission type optical deflection disk 30 in the second direction L2 and such that the light beam reaches to the disk face of the transmission type optical deflection disk 30 under the condition of a divergent beam in the first direction L1. Therefore, the light beam emitted from the light source device 10 is formed in a longitudinally long spot on the disk face of the transmission type optical deflection disk 30 and its narrow width in the second direction L2 is set in a peripheral direction of the transmission type optical deflection disk 30. Accordingly, the light source device 10 emits a light beam with the far field pattern having a major axis direction and a minor axis direction to the transmission type optical deflection disk 30 such that the minor axis direction is set to be the peripheral direction of the transmission type optical deflection disk 30. Therefore, a light beam is emitted through the transmission type optical deflection disk 30 so as to form a horizontally long spot whose divergence angle is large in the second direction L2 and whose divergence angle is small in the first direction L1. The light beam is scanned in the first direction L1 according to the rotation of the transmission type optical deflection disk 30.

A scanning method of the light beam in the light beam scanning device 1 constructed as described above will be described below. Fig. 5 is an explanatory view showing the temporal variations of a scanning direction in the light beam scanning in accordance with an embodiment.

In the light beam scanning device 1 in accordance with an embodiment, as shown in Fig. 2, the transmission type optical deflection disk 30 is rotated at an equal speed with a predetermined number of revolutions by the synchronous motor 40. In this state, a laser beam is emitted from the light source device 10 and the laser beam is approximately perpendicularly incident to the face on the incident side of the transmission type optical deflection disk 30. More specifically, the laser beam is incident toward the center position of the width in the peripheral direction of one of the optical deflection regions 32.

The light beam which is incident on the optical deflection region 32 of the transmission type optical deflection disk 30 is refracted by the inclined face 33 to be emitted when the light beam transmits through the transmission type optical deflection disk 30. For example, as shown in Fig. 1, the light beam is refracted and emitted in the direction of the scanning angle θs1 by a certain optical deflection region 32. In accordance with an embodiment, as described above, the inclination angles θw of the inclined faces 33 of the adjacent optical deflection regions 32 are set to gradually increase or decrease. Therefore, in the next optical deflection region 32, the light beam is refracted and emitted, for example, in the direction of the scanning angle θs2 which has an angle difference of 0.1° from the scanning angle θs1. Accordingly, the light beam is successively emitted through the transmission type optical deflection disk 30 at the intervals, for example, of 0.1° according to the rotation and thus a predetermined area is scanned.

As a result, the temporal variation of the scanning direction in the light beam scanning device 1 in accordance with an embodiment is, for example, illustrated as shown in Fig. 5. In the light beam scanning device 1 in this embodiment, when the scanning angle is expressed such that the direction perpendicular to the disk face of the transmission type optical deflection disk 30 is set to be ± zero°, the outside in the radial direction with respect to ± zero° is set to be "-" (minus) direction, and the inside in the radial direction is set to be "+" (plus) direction, after the reference pulse P1 occurs as a reference signal by a photo-coupler described below, a light beam is emitted through the transmission type optical deflection disk 30 in the "-α°" direction at the time point passed by the time "t1". After that, the scanning direction is changed in a stepped manner and one cycle of scanning is finished at the time point when the light beam is emitted in the "+α°" direction. In accordance with an embodiment, "α" is set to be, for example, from 8° to 25°.

After the scanning described above is performed during the period "t5", the reference pulse P1 is generated by a photo-coupler again and the above-mentioned light beam scanning is repeated. In this embodiment, the interval of the respective steps corresponds to the resolving power. Further, in the time period t4 of the respective steps, the detection of an object is performed by using the time period t2 except the time period t3 that is required to change the scanning direction. As a result, since the emitted direction of the light beam can be determined by the elapsed time from the reference pulse P1, it can be detected which direction obstacle is existed on the basis of the return light beam. In accordance with an embodiment, the laser diode 13 may be continuously driven but it is preferable to perform pulse drive in which the laser diode 13 is turned on only during the period corresponding to the time period t2.

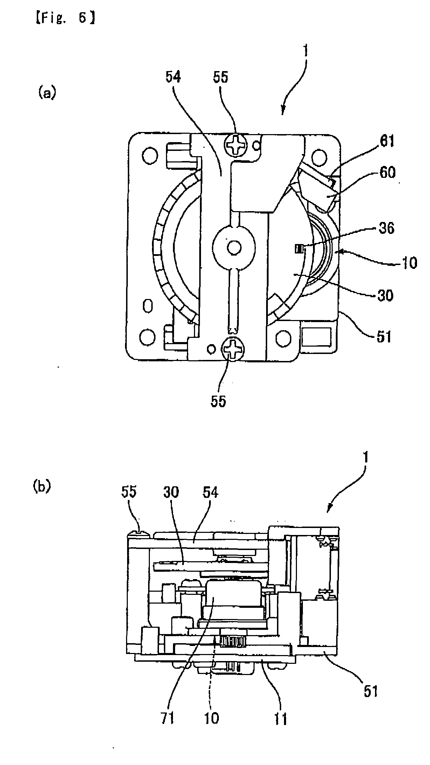

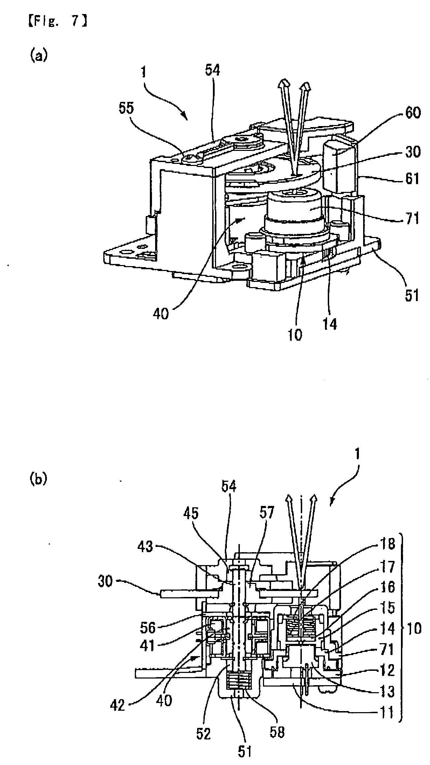

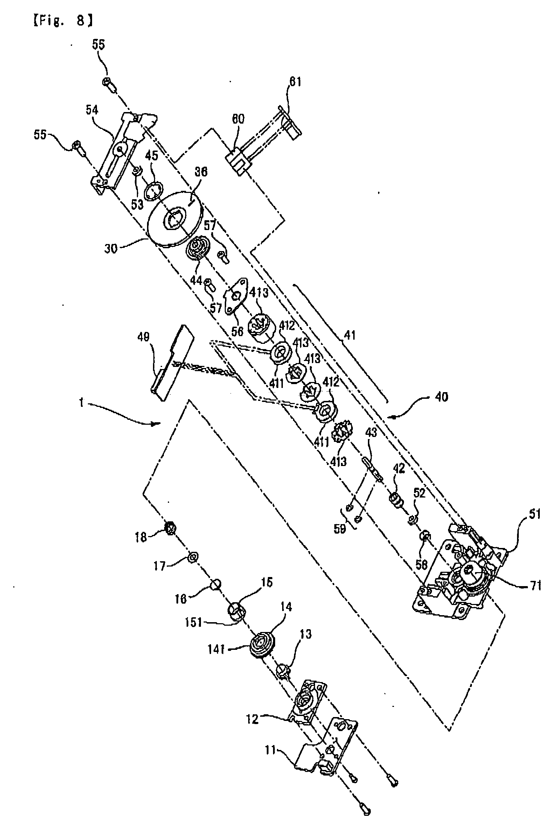

Fig. 6(a) is a plan view showing a light beam scanning device in accordance with an embodiment and Fig. 6 (b) is its side view. Fig. 7(a) is a perspective view showing a light beam scanning device in accordance with an embodiment and Fig. 7(b) is its sectional view. Fig. 8 is an exploded perspective view showing a light beam scanning device in accordance with an embodiment.

In order to structure the light beam scanning device 1 which is described with reference to Figs. 1 through 5, in this embodiment, as shown in Figs. 6(a) and 6(b) through Fig. 8, a light source device 10 and an optical deflection mechanism 3 are mounted on a common base 51. The optical deflection mechanism 3 includes a transmission type optical deflection disk 30 as an optical deflection element and a synchronous motor 40 for rotating the transmission type optical deflection disk 30 around the axial line. The synchronous motor 40, which is a stepping motor, includes a ring-shaped stator 41, a rotor magnet 42 that is disposed on the inner side of the ring-shaped stator 41, and a rotation shaft 43 to which the rotor magnet 42 is fixed by E-type retaining rings 59. The stator 41 is constructed of two stages of upper and lower stator assemblies. Each of the stator assemblies is structured such that a coil bobbin 412 around which a coil 411 is wound is sandwiched with two pieces of upper and lower cores 413. In this state, the pole teeth extended from two pieces of the upper and lower cores 413 are alternately arranged side by side along the inner peripheral surface of the bobbin 412. In the rotor magnet 42, an N-pole and an S-pole are alternately magnetized in the outer peripheral surface in its peripheral direction. A power supply circuit board 49 is connected to the coil 411.

The base end side of the rotation shaft 43 is supported on a base 51 through a bearing 52 composed of a ball bearing and the upper end side of the rotation shaft 43 is supported on an upper plate 54 through a bearing 53 composed of a ball bearing. The upper plate 54 is fixed to the base 51 with a specified space therebetween with screws 55 and a middle plate 56 is fixed with screws 57 between the base 51 and the upper plate 54 so as to have specified spaces to the base 51 and the upper plate 54. A hole for passing through the rotation shaft 43 is formed in the middle plate 56. A coil spring 58 for applying pressurization to the bearing 52 composed of a ball bearing is disposed between the bearing 52 and the base 51.

In the synchronous motor 40, a holder 44 is fixed to the rotation shaft 43 at a slightly upper position of the middle plate 56 and a transmission type optical deflection disk 30 is fixed on the holder 44 with a push nut 45. The transmission type optical deflection disk 30 is formed with a light shielding part 36 and a photo-coupler 60 for generating the reference pulse P1 as a reference signal, which is described with reference to Fig. 5, is disposed at a position where the light shielding part 36 passes. A circuit board 61 is connected to the photo-coupler 60.

In the light beam scanning device 1 structured as described above, when an electric current is applied to the coil 411, the rotation shaft 43 is rotated around the axial line to rotate the transmission type optical deflection disk 30.

A mounting portion for the light source device 10 is formed on the base 51 at the side portion of the area where the synchronous motor 40 is mounted. A cover 71 in which an opening part for securing an optical path is formed in its upper face part is mounted on the mounting portion for the light source device 10. Under the cover 71, a wiring circuit board 11, a holder 12, a laser diode 13, a disk-shaped gear 14 disposed around the laser diode 13, a bush 15, a collimating lens 16 supported by the bush 15, a washer 17, a coil spring 18 are mounted in this order. The disk-shaped gear 14 is formed with a projection part 141 whose upper face is formed in a spiral shaped cam. A receiving portion 151 which abuts with the projection part 141 of the gear 14 is formed on the under face of the bush 15 which holds the collimating lens 16. In accordance with an embodiment, since the under face of the receiving portion 151 is also formed to be inclined, when the gear 14 is rotated, the positional relationship between the projection part 141 and the receiving portion 151 is changed to move the collimating lens 16 in an optical axis direction and thus the position of the collimating lens 16 can be adjusted. As described above, in this embodiment, a position adjusting mechanism 19 for adjusting relative position between the laser diode 13 and the collimating lens 16 is structured.

As described above, in the light beam scanning device 1 in accordance with an embodiment, under the condition that the synchronous motor 40 is rotated, a laser beam emitted from the light source device 10 is incident on the transmission type optical deflection disk 30 to be refracted by the transmission type optical deflection disk 30 and the light beam is scanned in a specified direction. In other words, the transmission type optical deflection disk 30 is composed of a plurality of optical deflection regions 32 formed in a radial shape which are divided in a circumferential direction, and an inclined face 33 is formed for refracting the light beam which is incident on each of the optical deflection regions 32. Therefore, the transmission type optical deflection disk 30 can be formed in a simple structure. Further, when a number of inclined faces 33 whose refraction angles are different from each other is formed in a circumferential direction, a specified scanning area can be scanned with the transmission type optical deflection disk 30 which is turned by one revolution. In other words, in accordance with this embodiment, in order to emit a light beam at a certain scanning angle, only the inclined face 33 with a certain refraction angle θw is required to be formed in the transmission type optical deflection disk 30 and a plurality of grating grooves are not required like a deflection disk provided with a diffraction function to emit a light beam at a certain scanning angle. Therefore, even when the resolution power in the scanning of the light beam is enhanced, the diameter of the transmission type optical deflection disk 30 may be reduced and, as a result, the miniaturization of the device can be attained.

Further, the transmission type optical deflection disk 30 is formed in a flat disk shape and thus the device can be made thinner. In addition, in accordance with an embodiment, the transmission type optical deflection disk 30 is formed of resin. Therefore, the productivity of the transmission type optical deflection disk 30 is satisfactory and the weight and cost of the light beam scanning device 1 can be reduced. Further, for example, even when temperature varies in the range of about $\pm$ 50°C, the fluctuation rate of the scanning angle θs is 1% or less and thus the scanning performance is hardly affected.

Further, the inclined face 32 formed in the optical deflection region 33 in the transmission type optical deflection disk 30 is inclined in the radial direction. Therefore, even when the transmission type optical deflection disk 30 is rotated at an equal speed, the light beam emitted through the transmission type optical deflection disk 30 is emitted in the same direction while the light beam which is emitted from the light source device 10 is located in the same optical deflection region 33. Accordingly, the light beam can be emitted in the same direction during a prescribed time period without stopping the rotation of the transmission type optical deflection disk 30.

In addition, when the light beam emitted from the light source device 10 moves to the adjacent optical deflection region 33, the direction of the light beam emitted from the transmission type optical deflection disk 30 is immediately changed and the transitional period (period t3 shown in Fig. 5) is hardly required and thus useless time may not occur.

Further, each of the optical deflection regions 32 is provided with the inclined face 33 with a certain inclined angle and the inclination angles θw of the inclined faces 33 of adjacent optical deflection regions 32 are gradually increased or reduced. Therefore, the light beam can be successively emitted at different scanning angles θs with a simple structure. In addition, the optical deflection region 32 is formed so as to be divided in the circumferential direction at an approximately equal angular interval with the center hole 31 as its center. Therefore, when the speed of rotation of the synchronous motor 40 is constant, a pulse-shaped light beam may be emitted from the light source device 10 at a constant interval and thus the light source can be easily controlled.

In addition, different from the system in which a polygon mirror is rotated at a high speed to emit a number of light beams in the same direction during a short time, according to this embodiment, the light-emitting direction of the light beam is not changed during a prescribed time and thus the detection of an object can be surely performed. In addition, the transmission type optical deflection disk 30 is not required to be rotated at a high speed, an inexpensive synchronous motor 40 such as a stepping motor can be used.

The collimating lens 16 in the light source device 10 guides the light beam emitted from the laser diode 13 as a convergence light beam which is focused on the upper face or its vicinity of the transmission type optical deflection disk 30 in the second direction L2 (horizontal direction) that is perpendicular to the first direction L1 (vertical direction) in the optical axis direction. Therefore, the light beam emitted from the light source device 10 is irradiated to the optical deflection region 32 of the transmission type optical deflection disk 30 as a spot extending in the radial direction and the width of the light beam in the peripheral direction of the optical deflection region 32 of the transmission type optical deflection disk 30 is small. Accordingly, since a number of optical deflection regions 32 can be formed even in a small-sized transmission type optical deflection disk 30, the size of the transmission type optical deflection disk 30 can be reduced. Therefore, the transmission type optical deflection disk 30 is driven in an improved balance state and thus optical scanning can be performed with a high degree of accuracy and the downsizing of the synchronous motor 40 for driving the transmission type optical deflection disk 30 and the like can be also attained. As a result, considerable downsizing of the light beam device 1 can be obtained.

In addition, the light beam is emitted through the transmission type optical deflection disk 30 to form an oblong spot whose divergence angle in the second direction L2 is large and that in the first direction L1 is small. The light beam is scanned in the first direction L1 by the rotation of the transmission type optical deflection disk 30. Therefore, since the divergence angle in a direction perpendicular to the scanning direction is large, the monitoring area in a direction perpendicular to the scanning direction is also wide.

The refracting operation is utilized in the transmission type optical deflection disk 30 which is used in this embodiment and the refraction angle is hardly affected by the wavelength of the incident light beam. Therefore, in the light beam scanning device 1 of this embodiment in which a transmission type optical deflection disk 30 is used, the scanning of a light beam with a stable intensity can be performed. In addition, even when temperature varies, the variation of the transmission factor of the transmission type optical deflection disk 30 due to temperature variation is smaller than the variation of diffraction efficiency. Therefore, the light beam with a stable intensity can be scanned without being affected by temperature variation.

This embodiment is constructed such that the light beam emitted from the light source device 10 transmits through the transmission type optical deflection disk 30. Therefore, the refraction angle hardly varies even though rotational wobbling or surface wobbling occurs in the transmission type optical deflection disk 30 rotated by the synchronous motor 40. Accordingly, scanning jitter of the light beam is satisfactory.

Although the present invention has been shown and described with reference to a specific preferred embodiment, various changes and modifications will be apparent to those skilled in the art from the teachings herein.

For example, in the embodiment described above, the transmission type optical deflection disk 30 is formed of resin. However, the transmission type optical deflection disk 30 may be formed of glass. In this case, the temperature characteristic is stable because it is hardly affected by temperature variation and thus the light beam scanning device can be used even at a high temperature environment.

Further, in the embodiment described above, the inclined face 33 is formed on the emitting face of the transmission type optical deflection disk 30. However, the inclined face 33 may be formed on its incident face, its emitting face or both of them.

In addition, in the embodiment described above, the photo-coupler 60 is used as a sensor for detecting the rotating position of the transmission type optical deflection disk 30. However, a photodiode, an optical encoder and a Hall element or an MR (magneto-resistive) element may be used.

Furthermore, the embodiment described above is constructed such that the light beam emitted from the light source device 10 is transmitted through the transmission type optical deflection disk 30. However, the light beam emitted from the light source device 10 may be reflected by a reflection type optical deflection disk to be scanned. In this case, the upper face or the under face of the optical deflection disk described with reference to Figs. 1 and 2 may be formed to be a reflection surface and a light beam is irradiated from a light source device to the reflection surface of the optical deflection disk.

Further, in the embodiment described above, the light beam emitted from the laser beam emitting element is focused on the optical deflection disk or its vicinity in the direction where the divergence angle is small and the light beam is emitted such that the small divergence angle is set in the peripheral direction of the optical deflection disk. However, the light beam emitted from the laser beam emitting element may be focused on the optical deflection disk or its vicinity in the direction where the divergence angle is large and the light beam is emitted such that the large divergence angle is set in the peripheral direction of the optical deflection disk. In either case, when the divergence angle of the light beam emitted through the optical deflection disk is increased in a direction perpendicular to the scanning direction, monitoring can be performed in a wide angular area even in a direction perpendicular to the scanning direction.

Next, another embodiment of a light beam scanning device which is capable of holding the main scanning position in a specified direction of the sub-scanning direction will be described below with reference to the accompanying drawings.

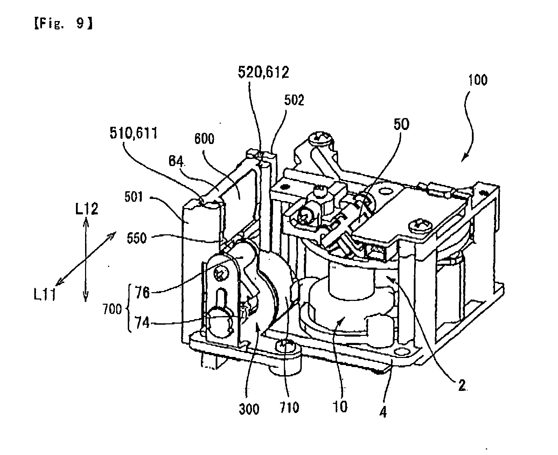

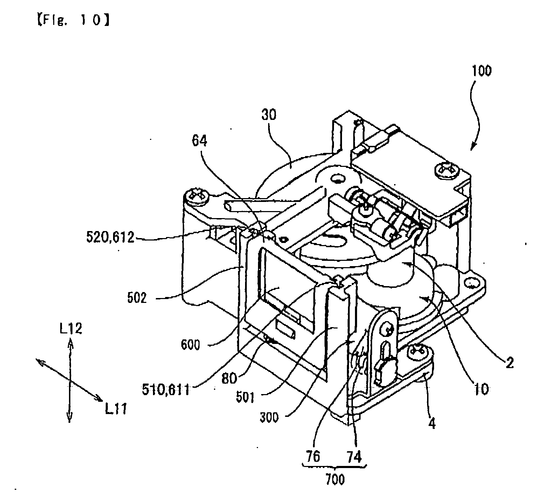

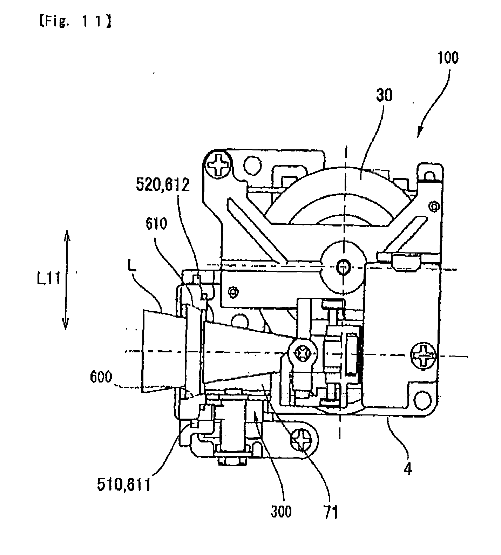

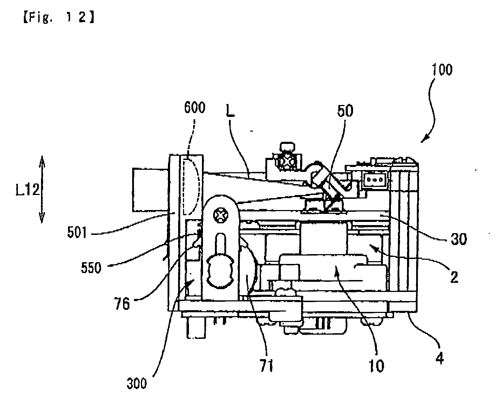

Fig. 9 is a perspective view showing a light beam scanning device in accordance with an embodiment which is viewed from obliquely rear side. Fig. 10 is its perspective view which is viewed from obliquely front side, Fig. 11 is its plan view, and Fig. 12 is its side view. The same notational symbols are used in the same structural elements as those in the above-mentioned embodiment and their detailed descriptions are omitted.

The light beam scanning device 100 shown in Figs. 9 through 12 is a device in which a light beam is scanned in a prescribed direction in an inter-vehicle distance measuring device, a monitoring device or the like. The light beam scanning device 100 includes a light source device 10 and a main scanning mechanism 2 for causing the light beam "L" emitted from the light source device 10 to scan in the main scanning direction L11 over a specified angle area on a common base 4. The light beam scanning device 100 is provided with frames 501, 502, which are erected from the base 4, on the emitting side of the light beam "L". A lens holder 61 is supported by the frames 501, 502 in a movable manner in the upper and lower direction. A divergence angle adjusting lens 600 is fixed to the lens holder 610 with a pressure spring 64. Further, the light beam scanning device 100 in this embodiment is provided with a sub-scanning mechanism 300 for changing the main scanning position of the light beam "L" in the sub-scanning direction L12 perpendicular to the main scanning direction L11 by changing the position in the upper and the lower direction of the lens holder 610 (divergence angle adjusting lens 600).

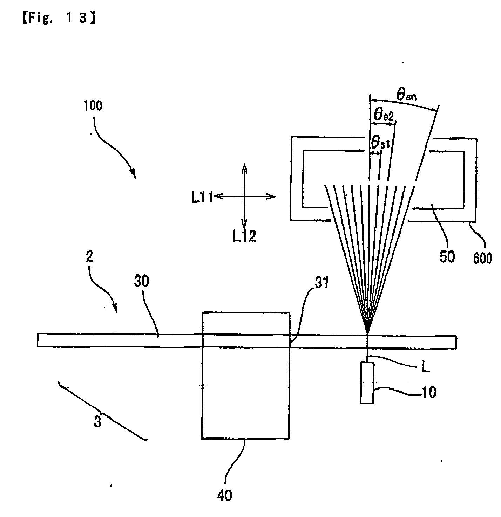

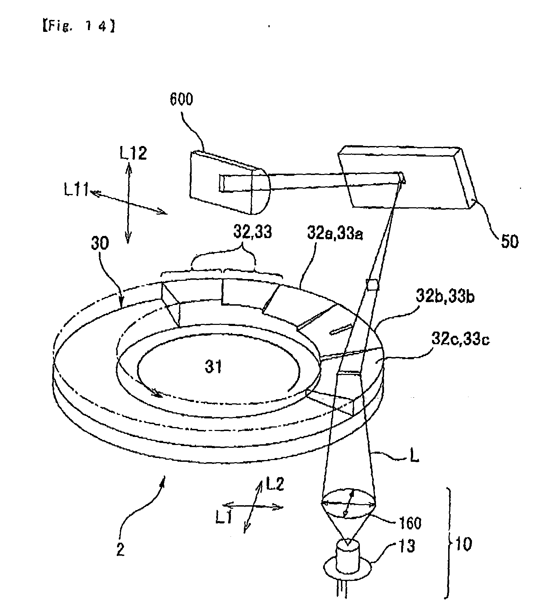

Fig. 13 is a schematic side view showing a schematic structure of a portion of the main scanning mechanism in a light beam scanning device to which the present invention is applied and Fig. 14 is an explanatory view showing the principle of the main scanning operation in the light beam scanning device.

In Figs. 13 and 14, the main scanning mechanism 2 includes a transmission type optical deflection disk 30 as an optical deflection element, a synchronous motor 40 for rotating the transmission type optical deflection disk 30 around the axial line, a total reflection mirror 50 for reflecting the light beam "L" emitted from the transmission type optical deflection disk 30 in a direction of about 90°, and a divergence angle adjusting lens 600 composed of a cylindrical lens, a toric lens, a toroidal lens or the like. The divergence angle adjusting lens 60 is provided with a power in the sub-scanning direction. The transmission type optical deflection disk 30 is formed with a center hole 31 at its center portion and the center hole 31 is held by the rotation output part of the synchronous motor 40. Therefore, the transmission type optical deflection disk 30 is rotationally driven around the shaft of the synchronous motor 40 (the center of transmission type optical deflection disk 30).

The main scanning mechanism 2 is constructed such that the light beam "L" is scanned in a specified direction under the condition that the transmission type optical deflection disk 30 is rotated and that the light beam "L", which is emitted in a direction perpendicular to the disk face of the transmission type optical deflection disk 30 from the light source device 10, is incident on the transmission type optical deflection disk 30 and refracted by the transmission type optical deflection disk 30. In other words, the transmission type optical deflection disk 30 is structured so that the direction in which the light beam "L" transmitted and emitted is varied according to the incident position of the light beam "L" in the peripheral direction. Further, the synchronous motor 40 rotationally drives the transmission type optical deflection disk 30 to vary the incident position of the light beam "L" emitted from the light source device 10 to the transmission type inclination disk 30. The structure of the transmission type optical deflection disk 30 is the same as the structure described with reference to Figs. 3(a), 3(b), 3(c) and 3(d) and thus its explanation is omitted.

As shown in Figs. 13 and 14, the light source device 10 is provided with a laser diode 13 as a light source and a condenser lens 160. The arranging relationship of the condenser lens 160 and the transmission type optical deflection disk 30 is set such that the light beam in the second direction L2 becomes to be a convergent light beam which focuses on the disk face or its vicinity of the transmission type optical deflection disk 30 and such that the light beam in the first direction L1 reaches the disk face of the transmission type optical deflection disk 30 under the condition of a convergent light beam which focuses at a remote position from the disk face of the transmission type optical deflection disk 30 or a divergent light beam. Therefore, the light beam emitted from the light source device 10 is formed in a longitudinally long spot which is extended in the radial direction on the disk face of the transmission type optical deflection disk 30 and its narrow width in the second direction L2 is set in a peripheral direction of the transmission type optical deflection disk 30.

In the light beam scanning device 100 in accordance with an embodiment, as shown in Fig. 14, the transmission type optical deflection disk 30 is rotated at an equal speed with a predetermined number of revolutions by the synchronous motor 40. In this state, a laser beam is emitted from the light source device 10 and the laser beam "L" is approximately perpendicularly incident to the face on the incident side of the transmission type optical deflection disk 30. More specifically, the laser beam is incident toward the center position of the width in the peripheral direction of one of the optical deflection regions 32.

As described with reference to Figs. 3(a), 3(b), 3(c) and 3(d), the light beam "L" which is incident on the optical deflection region 32 of the transmission type optical deflection disk 30 is refracted by the inclined face 33 to be emitted when the light beam "L" transmits through the transmission type optical deflection disk 30. For example, as shown in Fig. 13, the light beam is refracted and emitted in the direction of the scanning angle θs1 by a certain optical deflection region 32. In accordance with an embodiment, as described above, the inclination angles θw of the inclined faces 33 of the adjacent optical deflection regions 32 are set to gradually increase or decrease. Therefore, in the next adjacent optical deflection region 32, the light beam is refracted and emitted, for example, in the direction of the scanning angle θs2 which has an angle difference of 0.1° from the scanning angle θs1. Accordingly, the light beam is successively emitted through the transmission type optical deflection disk 30 at the intervals, for example, of 0.1° as the disk 30 is rotated.

After the light beam "L" emitted from the transmission type optical deflection disk 30 as described above is reflected by the total reflection mirror 50, the light beam "L" is scanned over a specified angular area in the main scanning direction L11. In this case, the divergence angle of the light beam "L" in the sub-scanning direction L12 is adjusted by the divergence angle adjusting lens 600.

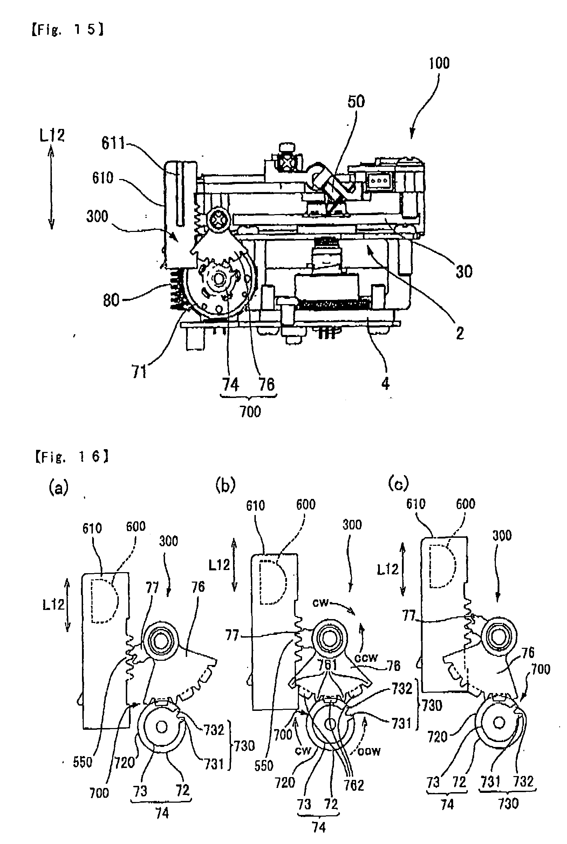

Fig. 15 is a side view showing the structure of a sub-scanning mechanism and the like in a light beam device in accordance with an embodiment in which a part of a frame and the like is cut off. Figs. 16(a), 16(b) and 16(c) are explanatory views showing the operation of a sub-scanning mechanism in a light beam device in accordance with an embodiment.

In Figs. 9 through 12, two frames 501, 502 erected from the base 4 are formed on both sides of the lens holder 610 on the emitting side of the light beam "L" in the light beam scanning device 100 in accordance with an embodiment. Projections 611, 612 which are extended in a vertical direction are formed on the outer sides of vertical frame portions of the lens holder 610. Guide grooves 510, 520 to which the projections 611, 612 are fitted are formed on the inner side faces of the frames 501, 502 and thus the lens holder 610 is guided by the guide grooves 510, 520 to be capable of moving in the up and down direction.

Further, as shown in Figs. 9 through 12 and Fig. 15, a sub-scanning mechanism 300 is mounted on the rear face side of the lens holder 610 on a base 4. In accordance with an embodiment, the sub-scanning mechanism 300 includes a sub-scanning drive motor 710 comprised of a stepping motor and a gear mechanism 700 for decelerating the rotation of the sub-scanning drive motor 710 to transmit to the lens holder 610 (divergence angle adjusting lens 600).

The gear mechanism 700 includes a driving gear 74 comprised of a chipped tooth gear which is coupled to the output shaft of the sub-scanning drive motor 710 and a driven gear 76 in a generally sectorial shape which is driven by the driving gear 74. The driven gear 76 is formed with a pinion 77 provided with two pieces of teeth protruding in a side direction from its base end side and a rack 550 engaging with the pinion 77 is formed on the rear face of the lens holder 610.

In the gear mechanism 700, as shown in Fig. 16(b), four pieces of teeth 761 are formed such that the respective teeth are formed over the entire width in the thickness direction in the circular arc-shaped peripheral portion of the driven gear 76. Further, three pieces of trapezoidal-shaped teeth 762 are formed on the front face side in the thickness direction between these teeth 761 so as to be thinner than the entire width. Therefore, the rear face side of the trapezoidal-shaped tooth 762 is formed to be a circular arc portion whose radius is the bottom portion of the teeth 761, 762.

The driving gear 74 is provided with a large diameter disk part 72 which is formed on the rear face side in its thickness direction and a small diameter disk part 73 which is formed on the front face side in its thickness direction. A teeth part 730 comprised of two pieces of teeth 731, 732 is formed on the outer peripheral face of the small diameter disk part 73 and the remaining portion of the outer peripheral face of the small diameter disk part 73 is formed to be a circular arc portion. A cutout portion is formed at a portion corresponding to the portion between the two pieces of teeth 731, 732 in the outer peripheral face of the large diameter disk part 72 and the remaining portion is formed to be a rotation preventing part 720 formed in a circular arc-shape. Therefore, the remaining portion in the entire circumferential face of the driving gear 74 except the portion where the teeth part 730 is formed is structured to be the rotation preventing part 720. In the state shown in Fig. 16(b), the driving gear 74 abuts with the teeth 761 under the condition that the circular arc shaped rotation preventing part 720 of the large diameter disk part 72 is disposed between two pieces of teeth 761 of the driven gear 76. Therefore, in this state, the driven gear 76 is prevented from being rotated even though an electrical power is not supplied to the sub-scanning driving motor 71.

Further, as shown in Figs. 10 and 15, in the sub-scanning mechanism 300 in this embodiment, in order to eliminate a backlash between the driving gear 74 and the driven gear 76, a compression coil spring 80 (backlash eliminating means) which urges the lens holder 610 upward for eliminating the backlash between the driving gear 74 and the driven gear 76 is disposed between the base 4 and the lens holder 610.

In the sub-scanning mechanism 300 structured as described above, when the output shaft of the sub-scanning driving motor 71 rotates, for example, in a clockwise direction CW from the state shown in Fig. 16(b), the teeth 731, 732 of the driving gear 74 are engaged with the teeth 761, 762 of the driven gear 76 and, as shown in Fig. 16(a), the driven gear 76 is turned in the counterclockwise direction CCW when the driving gear 74 is rotated by one revolution to the original position. The turning of the driven gear 76 is transmitted to the lens holder 610 through a pinion 77 and a rack 550 to move the lens holder 610 downward. As a result, the divergence angle adjusting lens 600 is also moved downward and thus the main scanning position of the light beam "L" moves obliquely downward in the sub-scanning direction L12 by the angle of 2.5°. Further, in the state shown in Fig. 16(a), the circular arc-shaped rotation preventing part 720 of the large diameter disk part 72 abuts with the teeth 761 under the condition that the circular arc-shaped rotation preventing part 720 is disposed between two pieces of teeth 761 of the driven gear 76 and thus the driven gear 76 is prevented from being turned.

Further, when the output shaft of the sub-scanning driving motor 71 is rotated, for example, in the counterclockwise direction CCW from the state shown in Fig. 16(a), the state as shown in Fig. 16(b) is obtained.

When the output shaft of the sub-scanning driving motor 71 is rotated, for example, in the counterclockwise direction CCW from the state shown in Fig. 16(b), the teeth 731, 732 of the driving gear 74 are engaged with the teeth 761, 762 of the driven gear 76 and the driven gear 76 is turned in the clockwise direction CW as shown in Fig. 16(c) during the driving gear 74 is rotated by one revolution to the original position. The turning of the driven gear 76 is transmitted to the lens holder 610 through the pinion 77 and the rack 550 to move the lens holder 610 upward. As a result, the divergence angle adjusting lens 600 is also moved upward and thus the main scanning position of the light beam "L" moves obliquely upward in the sub-scanning direction L12 by the angle of 2.5°. Further, in the state shown in Fig. 16(c), the circular arc-shaped rotation preventing part 720 of the large diameter disk part 72 abuts with the teeth 761 under the condition that the circular arc-shaped rotation preventing part 720 is disposed between two pieces of teeth 761 of the driven gear 76 and thus the driven gear 76 is prevented from being turned.

In addition, when the output shaft of the sub-scanning driving motor 71 is rotated, for example, in the counterclockwise direction CCW from the state shown in Fig. 16(c), the state as shown in Fig. 16(b) is obtained.

As described above, according to the light beam scanning device 100 in this embodiment, similar effects to those of the embodiment described above can be obtained.

For example, in the light beam scanning device 100 in this embodiment, under the condition that the synchronous motor 40 is rotated, the laser beam emitted from the light source device 10 is incident on the transmission type optical deflection disk 30 and refracted by the transmission type optical deflection disk 30 to cause the light beam to be scanned in the main scanning direction L11. In other words, the transmission type optical deflection disk 30 is provided with a plurality of radial optical deflection regions 32 which are divided in a circumferential direction, and an inclined face 33 is formed to refract the light beam which is incident on each of the optical deflection regions 32. Therefore, the transmission type optical deflection disk 30 can be formed in a simple structure. Further, when a number of inclined faces 33 whose refraction angles are different from each other is formed in a circumferential direction, a specified scanning area can be scanned by rotating the transmission type optical deflection disk 30 by one revolution. In other words, in accordance with this embodiment, in order to emit a light beam at one scanning angle, only one inclined face 33 with a certain refraction angle θw is required to be formed in the transmission type optical deflection disk 30 and a large number of grating grooves are not required like a deflection disk which is provided with a diffraction function to emit a light beam at one scanning angle. Therefore, even when the resolution power in the scanning of the light beam is enhanced, the diameter of the transmission type optical deflection disk 30 is not required to be increased and, as a result, the miniaturization of the device can be attained.

Further, the condenser lens 160 in the light source device 10 guides the light beam "L" emitted from the laser diode 13 as a convergence light beam which is focused on the upper face or its vicinity of the transmission type optical deflection disk 30 in the second direction L2 (horizontal direction) that is perpendicular to the first direction L1 (vertical direction) in the optical axis direction. Therefore, the light beam emitted from the light source device 10 is irradiated to the optical deflection region 32 of the transmission type optical deflection disk 30 as a spot which extends in the radial direction and the width of the light beam in the peripheral direction of the optical deflection region 32 of the transmission type optical deflection disk 30 is small. Accordingly, since a number of optical deflection regions 32 can be formed even in a small-sized transmission type optical deflection disk 30, the size of the transmission type optical deflection disk 30 can be reduced. Therefore, the transmission type optical deflection disk 30 is driven in an improved balance state and thus optical scanning can be performed with a high degree of accuracy and the downsizing of the synchronous motor 40 for driving the transmission type optical deflection disk 30 and the like can be attained. As a result, considerable downsizing of the light beam device 100 can be obtained.

The transmission type optical deflection disk 30 which is used in this embodiment utilizes refracting operation and the refraction angle is hardly affected by the wavelength of the incident light beam. Therefore, in the light beam scanning device 100 of this embodiment in which the transmission type optical deflection disk 30 is used, the scanning of a light beam with a stable intensity can be performed. In addition, even when temperature varies, the variation of the transmission factor of the transmission type optical deflection disk 30 due to temperature variation is smaller than the variation of diffraction efficiency. Therefore, the light beam with a stable intensity can be scanned without being almost affected by temperature variation.

In addition, in the light beam scanning device 100 in this embodiment, the distance between the laser diode 13 and the condenser lens 160 and the distance between the condenser lens 160 and the transmission type optical deflection disk 30 are set such that the light beam "L" which is emitted from the light source device 10 is focused on the upper face or its vicinity of the transmission type optical deflection disk 30 in the second direction L2. Therefore, there may be a limitation that the divergence angle of the light beam "L" in the sub-scanning direction L12 which is emitted from the transmission type optical deflection disk 30 cannot be set in a desired angle. However, in this embodiment, the divergence angle adjusting lens 600 is disposed at a rear position of the transmission type optical deflection disk 30. Further, the divergence angle adjusting lens 600 sets the divergence angle of the light beam "L" emitted from the transmission type optical deflection disk 30 at a desired angle in the sub-scanning direction L12 which is perpendicular to the main scanning direction L11 by the transmission type optical deflection disk 30. Therefore, according to the light beam scanning device 100 in this embodiment, the light beam "L" can be scanned in which the divergence angle in the sub-scanning direction L12 is set to be a prescribed condition.

In addition, in the sub-scanning mechanism 300 in this embodiment, when the rotation of sub-scanning drive motor 71 is decelerated by the gear mechanism 700 and transmitted to the lens holder 610 (divergence angle adjusting lens 600), the position of the divergence angle adjusting lens 600 is changed and the main scanning position of the light beam "L" varies in the sub-scanning direction L12. Therefore, for example, in the case that the light beam scanning device 100 is used in an inter-vehicle distance measuring device or the like, even when the heights of vehicles running ahead are different from each other, the return light beams can be surely detected.

Further, the driving gear 74 in the gear mechanism 700 includes the teeth part 730 for driving the driven gear 76 and the rotation preventing part 720 which abuts with the driven gear 76 for preventing the turning of the driven gear 76. Therefore, after the main scanning position of the light beam "L" is varied in the sub-scanning direction L12, the turning of the driven gear 76 is prevented by the rotation preventing part 720 of the driving gear 74. Accordingly, the position of the divergence angle adjusting lens 600 is held even in the state that energization of the sub-scanning drive motor 71 is stopped and the position of the divergence angle adjusting lens 600 is not varied by vibration or the like. As a result, the light beam scanning device 100 can be attained with an inexpensive structure in which its scanning direction is stable and electric power consumption is reduced.

Although the present invention has been shown and described with reference to a specific preferred embodiment, various changes and modifications will be apparent to those skilled in the art from the teachings herein. For example, in the embodiment described above, the main scanning position of the light beam "L" is changed in the sub-scanning direction L12 by changing the position of the divergence angle adjusting lens 600. However, the attitude or orientation of the divergence angle adjusting lens 600 may be changed. Further, instead of changing the divergence angle adjusting lens 600, the main scanning position of the light beam "L" may be changed in the sub-scanning direction L12 by changing the position or the orientation of the total reflection mirror 50.

In the embodiment described above, the main scanning position of the light beam "L" is changed to three positions of an upper position, a middle position and a lower position in the sub-scanning direction L12. However, the number of the positions is not limited to three and may be two or more than four.

Furthermore, the embodiment described above is constructed such that the light beam emitted from the light source device 10 transmits through the transmission type optical deflection disk 30. However, the light beam emitted from the light source device 10 may be reflected by a reflection type optical deflection disk to be scanned. In this case, the upper face or under face of the optical deflection disk described with reference to Figs. 13 and 14 may be formed to be a reflection surface and a light beam is irradiated to the reflection surface of the optical deflection disk from a light source device. Further, the present invention may be applied to a light beam scanning device in which a light beam is scanned in the main scanning direction L11 by a polygon mirror instead of the deflection disk as described above.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

**Claims**

1. A light beam scanning device comprising:

   a light source device; and
   an optical deflection mechanism for causing a light beam emitted from the light source device to scan over a specified angle area, the optical deflection mechanism comprising an optical deflection disk and a synchronous motor for driving the optical deflection disk;

   wherein a disk face of the optical deflection disk includes an inclined face which is formed in each of a plurality of optical deflection regions divided in a peripheral direction for refracting and emitting the light beam, which is incident on the optical deflection disk, in a direction which is different from a direction of refracting and emitting from an adjacent optical deflection region, and
   the inclined face is formed so as to be inclined in a radial direction in each of the plurality of the optical deflection regions.

2. The light beam scanning device according to claim 1, wherein the synchronous motor is a stepping motor.

3. The light beam scanning device according to claim 1, further comprising a sensor for detecting a rotational position of the optical deflection disk.

4. The light beam scanning device according to claim 1, wherein an inclination angle of the inclined face is successively varied in the plurality of the optical deflection regions which are disposed in the peripheral direction.

5. The light beam scanning device according to claim 1, wherein the optical deflection disk is a transmission type optical deflection disk which refracts and emits a light beam which is transmitted through the optical deflection disk in a direction different from a direction in an adjacent optical deflection region in each of the plurality of the optical deflection regions.

6. The light beam scanning device according to claim 1, wherein the light source device emits the light beam as a converged light beam which is long in the radial direction of the optical deflection disk and which is focused at the optical deflection disk or a vicinity of the optical deflection disk in the peripheral direction.

7. The light beam scanning device according to claim 1, wherein the light source device comprises:

a laser beam emitting element; and
a lens which guides a light beam emitted from the laser beam emitting element as a converged light beam that is focused at the optical deflection disk or a vicinity of the optical deflection disk in at least one of a first direction and a second direction that are perpendicular to each other in an optical axis direction.

8. The light beam scanning device according to claim 7, further comprising a position adjusting mechanism for adjusting a relative position in an optical axis direction between the laser beam emitting element and the lens.

9. A light beam scanning device comprising:

a light source device;
a main scanning mechanism for causing a light beam emitted from the light source device to scan over a specified angle area in a main scanning direction; and
a sub-scanning mechanism for changing a position or an attitude of a specified optical element to vary a main scanning position of the light beam in a sub-scanning direction which is perpendicular to the main scanning direction, the sub-scanning mechanism comprising:

a sub-scanning drive motor; and
a gear mechanism for decelerating rotation of the sub-scanning drive motor to transmit to the specified optical element, the gear mechanism comprising:

a driving gear comprised of a chipped tooth gear and
a driven gear which is driven by the driving gear;

wherein the driving gear being provided with a teeth part for rotationally driving the driven gear and a rotation preventing part which abuts with the driven gear for preventing rotation of the driven gear in a specified position in the peripheral direction.

10. The light beam scanning device according to claim 9, wherein an entire circumference of the driving gear except a portion where the teeth part is formed is formed as the rotation preventing part.

11. The light beam scanning device according to claim 10, wherein the sub-scanning mechanism is structured such that the driving gear is rotated from a waiting position where rotation of the driven gear is prevented by the rotation preventing part to the waiting position after the driven gear is rotationally driven by the driving gear.

12. The light beam scanning device according to claim 9, wherein the sub-scanning mechanism is provided with a backlash eliminating means for eliminating a backlash between the driving gear and the driven gear.

13. The light beam scanning device according to claim 12, wherein the backlash eliminating means includes a compression coil spring which urges the specified optical element to eliminate the backlash between the chipped tooth gear and the driven gear.

14. The light beam scanning device according to claim 9, wherein the main scanning mechanism comprises:

an optical deflection disk in which an emitting direction of the light beam in the main scanning direction varies on the basis of an incident position of the light beam in the peripheral direction; and
a main scanning motor for rotationally driving the optical deflection disk to vary the incident position of the light beam to the optical deflection disk of the light beam from the light source device.

15. The light beam scanning device according to claim 9, wherein the specified optical element is a divergence angle adjusting lens provided with a power for adjusting a divergence angle in the sub-scanning direction of the light beam emitted from the main scanning mechanism.

16. A light beam scanning device comprising:

a light source device;

a main scanning mechanism for scanning a light beam emitted from the light source device over a specified angle area in a main scanning direction, the main scanning mechanism comprising:

an optical deflection disk in which an emitting direction of the light beam in the main scanning direction varies on the basis of an incident position of the light beam in the peripheral direction; and

a main scanning motor for rotationally driving the optical deflection disk to vary the incident position of the light beam emitted from the light source device to the optical deflection disk; and

a sub-scanning mechanism for changing a position or an attitude of a specified optical element to vary a main scanning position of the light beam in a sub-scanning direction which is perpendicular to the main scanning direction, the sub-scanning mechanism including a sub-scanning drive motor and a gear mechanism for decelerating rotation of the sub-scanning drive motor to transmit to the specified optical element.

17. The light beam scanning device according to claim 16, wherein the specified optical element is a divergence angle adjusting lens provided with a power for adjusting a divergence angle in the sub-scanning direction of the light beam emitted from the main scanning mechanism.

18. The light beam scanning device according to claim 16, wherein a disk face of the optical deflection disk includes an inclined face which is formed in each of a plurality of optical deflection regions divided in a peripheral direction for refracting and emitting the light beam, which is incident on the optical deflection disk, in a direction which is different from a direction of refracting and emitting from an adjacent optical deflection region.

19. The light beam scanning device according to claim 16, wherein the light source device comprises:

a laser beam emitting element; and

a lens which guides a light beam emitted from the laser beam emitting element as a converged light beam that is focused at the optical deflection disk or a vicinity of the optical deflection disk in at least one of a first direction and a second direction that are perpendicular to each other in an optical axis direction.

[Fig. 1]

[Fig. 2]

[Fig. 3]

(a)

30

33
32
32
33
32
33

z
x y
31

33
33
32
32
33

33o

x
y
z

32c
32b
32a
33a
33b

(d)

θwa
33a
32a

(c)

θwb
33b
32b

(b)

θwc
33c
32c

[Fig. 4]

[Fig. 5]

[Fig. 6]

(a)

(b)

[Fig. 7]

(a)

(b)

[Fig. 8]

[Fig. 9]

【Fig. 10】

【Fig. 11】

[Fig. 1 2]

[Fig. 1 3]

[Fig. 14]

[Fig. 1 5]

[Fig. 1 6]

(a)　　　　　　　　(b)　　　　　　　　(c)